Europäisches Patentamt

European Patent Office

Office européen des brevets

(19)

(11) **EP 1 394 110 A1**

(12) **EUROPEAN PATENT APPLICATION**
published in accordance with Art. 158(3) EPC

(43) Date of publication:
03.03.2004 Bulletin 2004/10

(51) Int Cl.[7]: **C01B 31/08**, B01J 20/20,
B01D 53/60

(21) Application number: 02716367.4

(22) Date of filing: 24.01.2002

(86) International application number:
**PCT/JP2002/000522**

(87) International publication number:
**WO 2002/098793 (12.12.2002 Gazette 2002/50)**

(84) Designated Contracting States:
**AT BE CH CY DE DK ES FI FR GB GR IE IT LI LU
MC NL PT SE TR**

(30) Priority: 30.05.2001 JP 2001162881
30.05.2001 JP 2001162882

(71) Applicants:
• **NIPPON STEEL CORPORATION
Tokyo 100-8071 (JP)**
• **Taihei Kogyo Co., Ltd.
Tokyo 104-0033 (JP)**

(72) Inventors:
• **UEDA, Haruhisa,
C/O NIPPON STEEL CORPORATION
Tokyo 100-8071 (JP)**
• **KAMIYAMA, H,
C/O NIPPON STEEL CORP. NAGOYA WORKS
Tokai-shi, Aichi 476-8686 (JP)**

• **SAITO, Koji,
C/O NIPPON STEEL CORPORATION
Futtsu-shi, Chiba 293-851 (JP)**
• **KINOSHITA, Masatugu,
C/O Taihei Kogyo Co., Ltd.
Tokyo 104-0033 (JP)**
• **NAKAUMA, Yoshinori, c/o Taihei Kogyo Co., Ltd.
Tokyo 104-0033 (JP)**
• **TAKAHASHI, Norimichi,
c/o Taihei Kogyo Co., Ltd.
Tokyo 104-0033 (JP)**
• **MIYOSHI, Hiroyuki, c/o Taihei Kogyo Co., Ltd.
Tokyo 104-0033 (JP)**

(74) Representative: **VOSSIUS & PARTNER
Siebertstrasse 4
81675 München (DE)**

(54) **ACTIVATED CARBON AND METHOD FOR PRODUCTION THEREOF**

(57) The present invention provides high-strength activated carbon having a high adsorption capacity, excellent in desulfurization and denitration performance and capable of withstanding re-circulated use in a moving bed type dry desulfurization and denitration process.

The present invention is activated carbon produced from coal wherein: desulfurization performance is enhanced by securing required pore volume by controlling volatile matter to 2.0% or more and the content of fixed carbon to 87 to 95%; denitration performance is enhanced and strength is secured, while economical efficiency is maintained, by controlling the amount of an $Fe_2O_3 + TiO_2$ component to 0.7% or more; the fusion of the pores of the activated carbon by the $SO_3 + H_2O$ com-

ponent during desulfurization is suppressed by controlling the amount of a $K_2O + Na_2O + CaO + MgO$ component to 0.3 to 1.0%; and durability is enhanced by suppressing the powdering during denitration caused by the ammonium sulfate formation resulting from the adsorption of ammonia.

Further, the present invention is a method of producing activated carbon by using semicoke produced from coal by low-temperature carbonization as the main material: in which method the kind of coal, wherein the amount of the mobile hydrogen components calculated from the results of the NMR measurement at a temperature at which the coal is in a plastic state is 30% or less, is used as the material coal of the semicoke.

EP 1 394 110 A1

# Fig.1

**Description**

Technical Field

This invention relates to high-strength activated carbon having good desulfurization and denitration properties and durability with minimal powdering, after repetition of use and reactivation, and being suitable particularly to the desulfurization and denitration of the exhaust gasses and so on from a thermal power plant, a sintering plant and the like, and a method of producing the same.

Background Art

In view of the growing environmental disruption resulting from the emission of atmospheric contaminants such as sulfur oxides and nitrogen oxides, more stringent emission regulation is imperative for the conservation of the global environment. The technologies for coping with the problem are varied; the dry moving bed type desulfurization and denitration treatment method is employed especially for the desulfurization and denitration of the exhaust gasses emitted from fixed emission sources, namely plants burning coal and heavy oils, and activated carbon is mainly used for the method. The activated carbon suitable for the use is required to have high $SO_x$ adsorption capacity, high denitration capacity for $NO_x$ under the addition of $NH_3$ and high durability for suppressing the disintegration caused by impact and wear in the moving beds and the powdering caused by reactions. As countermeasures, various kinds of activated carbon have been proposed, but a result satisfying all these requirements at the same time has not been obtained so far.

As some examples, activated carbon having an adsorption capacity enhanced by the addition of zinc oxide onto the surface of a carbon matrix (according to Japanese Unexamined Patent Publication No. H9-66231), that having metals such as Ti, Cr, V, Fe and Cu held in a carbon matrix (according to Japanese Examined Patent Publication No. S56-18246) and that having the properties as described above by the addition of titanium dioxide to a carbon matrix (according to Japanese Unexamined Patent Publication No. H9-20509), may be cited. However, when these substances are added in the order of several percents for improving catalytic functions, different metals coexist in the activated carbon and, as a result, large cracks are likely to develop inside the activated carbon, deteriorating its strength and durability. Besides, the addition of these substances makes the product catalysts expensive and, therefore, the proposed products are not economical. Apart from the above, in the activated carbon capable of obtaining good desulfurization and denitration properties by means of the control of organic oxygen contained in activated carbon and the optimization of volatile matter and grain size (according to Japanese Unexamined Patent Publication No. H11-555), while denitration performance is enhanced by increasing the amount of organic oxygen, which accelerates denitration through the optimization of the amount of organic oxygen, the proposed measure is basically insufficient in enhancing strength and increasing pore volume and so on for enhancing desulfurization capacity and, thus, the required properties are not satisfied. The activated carbon having a high adsorption property and long service life by controlling the strength to 90% or higher and optimizing the surface area and the pore volume (according to Japanese Unexamined Patent Publication No. H7-277716) is effective in adsorbing molecules of a large effective molecular size such as volatile matter judging from the pore diameter. However, its large specific surface area is incompatible with strength and durability and, what is more, the denitration performance of this activated carbon is not disclosed in the Publication. As explained above, no conventional activated carbon is satisfactory from all the above performance and cost aspects.

A wide variety of studies have been carried out for eliminating the shortcomings of activated carbon adsorbents. As a result, methods for producing formed activated carbon suitable for desulfurization and denitration purposes have been proposed, wherein coal is used as the raw material, various binders are added to the material coal and the mixture is formed and then carbonized and activated under specific conditions. For example, Japanese Examined Patent Publication No. S62-51885 discloses a method of: producing semicoke having high activity from coal using the semicoke as the main material; adding some kinds of coal and binders to the semicoke; adjusting the strength so as to control the Roga index to 20 to 30% and; then, carbonizing and activating the mixture. As another example, Japanese Unexamined Patent Publication No. H11-157822 discloses a method of adjusting the blend of material coal so as to control the free swelling index of the mixture to a range from 1.5 to 4 and then carbonizing and activating the mixture. However, the Roga index and free swelling index are the indices of the strength such as wear resistance and the coking property of blended coal and, therefore, though it is possible to produce activated carbon excellent in wear resistance and strength by controlling the blending of coal to make the Roga index and free swelling index fall within respective specific ranges, the desulfurization performance or the desulfurization and denitration performance is not necessarily improved by the measure.

Further, Japanese Unexamined Patent Publication No. H11-349317 discloses a method of producing activated carbon excellent in strength and adsorption capacity by blending various kinds of coal having volatile matter and fluidity within respective optimum ranges. In this method, however, there are many restrictions regarding the kinds of main and ancillary materials and production conditions such as the temperature and the heating rate and, as a consequence, the problems here are that the main and ancillary materials having homogeneous components are hardly available, the activated carbon is not easily produced owing to complicated production processes, and thus the production cost is increased.

Disclosure of the Invention

The present invention solves the conventional problems described above and provides economical activated carbon excellent in desulfurization and denitration properties and having high strength and durability to withstand re-circulated use in a moving bed type dry desulfurization and denitration process. More specifically, the present invention provides activated carbon for desulfurization and denitration use having an impact strength of 97% or more, a Roga strength of 96% or more, an $SO_2$ adsorption amount of 70 mg/g. or more, a denitration ratio of 20% or more and a powdering ratio of 1.0% or less under ammonia addition. The present invention also provides a method of producing high-strength activated carbon excellent in desulfurization property having a high adsorption capacity (such as $SO_x$ adsorption capacity) and a high strength to withstand re-circulated use in a moving bed type dry desulfurization and denitration process.

By focusing attention on the control of the components of activated carbon, the present inventors dedicated themselves to concentrated studies to develop economical activated carbon having sufficient desulfurization and denitration properties and high durability for treating multi-component exhaust gasses containing $SO_x$, $NO_x$, $H_2O$ and so on. As a result, they discovered that it was possible to attain the above object by controlling the components of activated carbon, and established the present invention. The present invention is, therefore, activated carbon for desulfurization and denitration use produced using coal as raw material, characterized by containing volatile matter at 2.0% or more, fixed carbon at 87 to 94%, $Fe_2O_3 + TiO_2$ at 0.7% or more and $K_2O + Na_2O + CaO + MgO$ at 0.3 to 1.0%.

The activated carbon according to the present invention is configured as follows. The fixed carbon component in the activated carbon product is controlled to 87% or more and, by so doing, a carbon matrix is secured and a high desulfurization capacity per unit pore volume is retained. In addition, the fixed carbon component is controlled to 94% or less and, by so doing, the development of the cracks caused by the contraction and expansion during carbonization resulting from the increased amount of superfluous carbon components is suppressed and, thus, the impact strength and Roga strength are prevented from deteriorating. The content of the volatile matter is controlled to 2% or more and the content of $Fe_2O_3 + TiO_2$ to 0.7% or more and, by so doing, denitration capacity is enhanced. In addition, the content of $K_2O + Na_2O + CaO + MgO$ is controlled to 0.3 to 1.0% and, by so doing, the fusion of activated carbon pores by $SO_x$ during desulfurization is inhibited and, at the same time, the powdering caused by the formation of ammonium sulfate owing to the adsorption of ammonia during denitration is suppressed, and, as a result, durability is enhanced. It has to be noted that activated carbon suitable for circulated use in a moving bed type dry desulfurization and denitration process is obtained by forming activated carbon into grains or pellets 3 to 20 mm in average diameter and 5 to 20 mm in length.

The present invention is also a method of producing robust activated carbon having an extremely high desulfurization performance (such as $SO_x$ adsorption capacity) and a high strength for withstanding protracted use in moving beds by selecting and mixing the kinds of coal wherein the amount of the components having a long transverse relaxation time, i.e., the amount of mobile hydrogen components (fusion index), in the coal grains is within a specific range, based on the results of the nuclear magnetic resonance (NMR) measurement in a temperature range where said coal is plasticized. More specifically, the present invention is a method of producing activated carbon, wherein activated carbon is produced by using the semicoke, which is obtained by applying low-temperature carbonization at a temperature of 300 to 600°C to coal, as the main material, using a kind of coal having a coking property as the ancillary material and, after the materials are mixed with a binder and formed into pellets, subjecting the pellets to a heat treatment for carbonization and activation, characterized by using the kind of coal, wherein the amount of the mobile hydrogen components calculated from the results of the NMR measurement at a temperature at which the coal is in a plastic state is 30% or less, as the material coal for semicoke, which constitutes the main material of the activated carbon. In addition, the present invention is a method of producing activated carbon by using a kind of coal, wherein the amount of the mobile hydrogen components calculated from the results of the NMR measurement at a temperature at which the coal is in a plastic state is 35 to 45%, as the coal having a coking property used as the ancillary material in the above invention.

By the method of producing activated carbon according to the present invention, a great number of microscopic pores 10 Å or so in diameter suitable for adsorbing $SO_x$ molecules are formed by using the kinds of coal, wherein the amount of the mobile hydrogen components calculated from the results of the NMR measurement at a temperature at which the coal is plasticized is 30% or less, as the material coal for semicoke which constitutes the main material. For this reason, the activated carbon produced from the semicoke has high strength and an excellent $SO_x$ adsorption capacity. Further, activated carbon having good appearance, a high Roga strength and a good $SO_x$ adsorption capacity is produced by using the coking coal, wherein the amount of the mobile hydrogen components calculated from the results of the NMR measurement is 35 to 45%, as the material coal for pellets, which material coal constitutes the ancillary material to be mixed to the above-mentioned semicoke which constitutes the main material.

Brief Description of the Drawings

[Fig. 1] A graph showing the relation between the amount of fixed carbon components and the desulfurization ratio.
[Fig. 2] A graph showing the relation of the amount of fixed carbon components to impact strength and Roga strength.
[Fig. 3] A graph showing the relation of the amount of $Fe_2O_3$ + $TiO_2$ components to denitration ratio and impact strength.
[Fig. 4] A graph showing the relation of the amount of $K_2O$ + $Na_2O$ + $CaO$ + $MgO$ components to powdering ratio and Roga strength.
[Fig. 5] A flow chart of the process for producing activated carbon according to the present invention.
[Fig. 6] An explanatory graph showing the distributions of pore volume of the kinds of semicoke produced from four kinds of coal classified by the amount of mobile hydrogen components.
[Fig. 7] A graph showing the relation between low-temperature carbonization time and the $SO_x$ adsorption capacity of semicoke.
[Fig. 8] A graph showing the relation between the mixing ratio of ancillary material coal having a coking property and Roga strength.
[Fig. 9] A graph showing the increase of $SO_x$ adsorption capacity with the increment of specific surface area with regard to the kinds of material coal for semicoke used as the main material of activated carbon.
[Fig. 10] A graph showing the change of the specific surface area of activated carbon according to the temperature of the low-temperature carbonization.
[Fig. 11] An explanatory illustration of a Roga strength tester.
[fig. 12] An explanatory illustration of the method of measuring denitration ratio and the ratio of powdering resulting from the formation of ammonium sulfate.

Best Mode for Carrying out the Invention

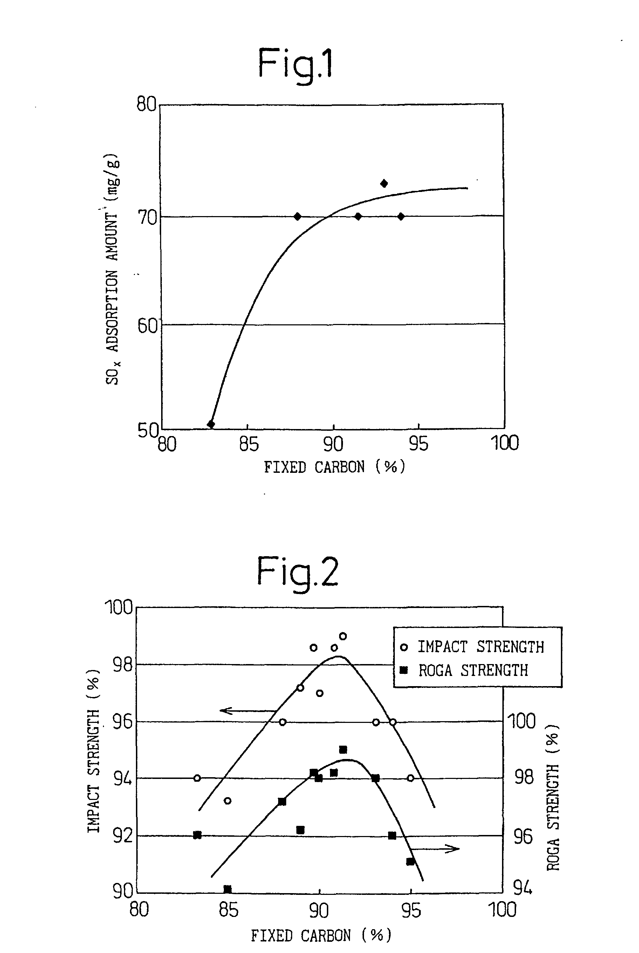

When the activated carbon according to the present invention has a fixed carbon amount of 87% or more, the pore volume, the number of pores and the specific surface area can be increased while the activated carbon has a matrix capable of maintaining a good impact strength and a good Roga strength. However, as seen in Fig. 1, when the amount of fixed carbon of the matrix is below 87%, the carbon points involved in reactions are decreased and, consequently, the pore volume and the specific surface area are also decreased even under the same conditions of the temperature and time of carbonization and the amount of activation steam and, as a result, the desulfurization capacity of the activated carbon is reduced.

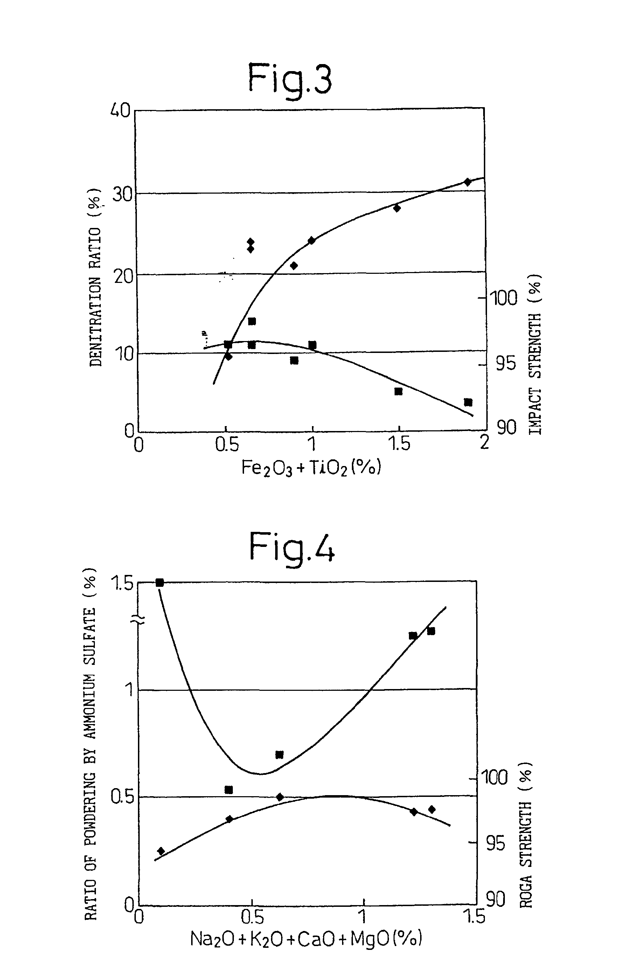

In such a situation, even if a great amount of steam is used for the activation in order to forcibly increase the pore volume and specific surface area, the number of pores does not increase in proportion to the amount of steam but only the pore volume does. This means that only the desulfurization capacity increases and, what is more, since the pore volume increases mainly in large diameter pores, strength decreases adversely. When the amount of fixed carbon is increased to over 94%, the desulfurization capacity becomes saturated even under the same conditions of the temperature and time of carbonization and the amount of activation steam as specified above and, in addition, as is clear from Fig. 2, impact strength and Roga strength are lowered, because cracks easily develop as a result of the shortage of ash content in portions not fused during carbonization, which ash content prevents the internal cracks resulting from the expansion and contraction during the carbonization process from propagating, as a consequence of the increase in carbon content. Further, when the amount of volatile matter is below 2% and that of the $Fe_2O_3$ + $TiO_2$ component is below 0.7%, as shown in Fig. 3, the denitration catalyst capacity of the activated carbon becomes less efficient, lowering its denitration capacity. In addition, when the amount of the $K_2O$ + $Na_2O$ + $CaO$ + $MgO$ component is below 0.3%, the very ammonia, which is added in usual practice as an auxiliary agent for accelerating the denitration using activated carbon, is adsorbed and the ammonia adsorbed in the pores of the activated carbon reacts with $SO_x$ to form crystals of ammonium sulfate in the pores, which, as a result of volume expansion, destroys the pores, causing the powdering of the activated carbon, as shown in Fig. 4. When the amount of the $K_2O$ + $Na_2O$ + $CaO$ + $MgO$ component exceeds 1.0%, on the other hand, the $SO_x$ existing in the pores in the form of sulfuric acid reacts with the $K_2O$ + $Na_2O$ + $CaO$ + $MgO$ component in the activated carbon and corrosion propagates from the positions where the $K_2O$ + $Na_2O$ + $CaO$ + $MgO$ component exists. This accelerates the powdering likewise and the durability of the activated carbon is remarkably deteriorated. For these reasons, in order to enhance the desulfurization and denitration efficiency and satisfy the performance in both the strength and durability aspects at the same time in the use of the activated carbon, it is imperative to restrain the contents of the above components to within the respective ranges specified above.

The amounts of volatile matter and carbon, strength, the amounts of $Fe_2O_3$, $TiO_2$, $K_2O$, $Na_2O$, CaO and MgO, $SO_x$ adsorption amount, denitration ratio and powdering ratio mentioned herein were measured by the following methods.

<Volatile matter>

A specimen is completely rid of free water in a dryer kept at 107°C, then, 1 g. of the specimen is put into a crucible with a lid, charged into an electric furnace heated to 900°C, heated for 7 min., extracted from the electric furnace immediately after the heating, and cooled first for 10 min. on a cold metal plate and then for 20 min. in a desiccator. The weight loss of the specimen by the heating is measured immediately after the cooling, and its ratio to the specimen weight initially put into the crucible is defined as the amount of the volatile matter. (According to Japanese Industrial Standard (JIS) M 8812.)

<Fixed carbon>

A specimen is completely rid of free water in a dryer kept at 107°C, 1 g. of the specimen is put into an ashing pot and charged into an electric furnace, held in the electric furnace set at 815°C for 1 h., extracted from the electric furnace, and cooled first for 10 min. on a cold metal plate and then for 20 min. in a desiccator. The mass in the ashing pot is measured after the cooling and its ratio to the specimen weight initially put into the ashing pot is defined as the content of ash. The amount of fixed carbon is calculated from the amounts of the volatile matter and the ash obtained as above by the following equation: fixed carbon (%) = 100 - (ash (%) + volatile matter (%)). (According to JIS M 8812.)

<Impact strength>

A specimen of 10 g. is put into a vertical cylindrical pipe 30 mm in diameter and 415 mm in height to form a bed on the bottom, a plummet 28 mm in diameter and 328 g. in weight is dropped onto the bed twice from a height of 415 mm, the specimen is discharged from the pipe and sifted through a 0.5-mm mesh sieve. The proportion of the size more than 0.5 mm is defined as the impact strength. This is an indicator of expressing the mechanical strength of activated carbon independent from other factors.

<Roga strength>

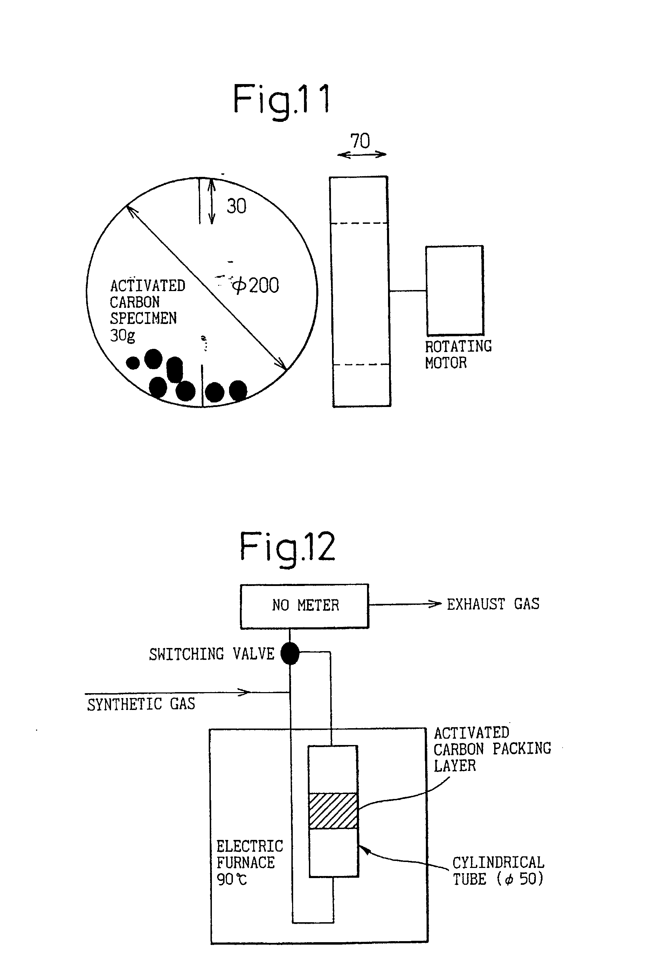

An activated carbon specimen of 30 g. is put into a rotating cylinder (200 x 70 mm) structured to receive and discharge activated carbon and having two baffle plates 30 mm in height placed at opposing positions of its inner wall, the rotating cylinder is made to turn 1,000 rounds at a rotation speed of 60 rpm, then, the activated carbon is discharged and sifted through a 3-mm mesh sieve to remove fine powder. The weight ratio of more than 3-mm mesh sieve to the initial weight of activated carbon is calculated and the Roga strength is determined by the following equation (1). A Roga strength tester is shown in Fig. 11.

$$\text{Roga strength} = (\text{weight of the activated carbon more}$$

$$\text{than 3-mm mesh sieve (g.)}) / (\text{weight of initially charged}$$

$$\text{activated carbon (g.) 5}) \times 100 \qquad (1)$$

<Analysis of $Fe_2O_3$, $TiO_2$, $K_2O$, $Na_2O$, CaO and MgO components>

Each of these oxides is quantified according to JIS M 8815 from the amount of ash obtained in the calculation of the volatile matter.

<Specific surface area>

A powder specimen of 2 g. ground in an agate mortar is charged into a measuring cell (Omnisorp 360 made by Beckman Coulter Inc.), deaerated under a vacuum at 150°C for 6 h. and subjected to adsorption and desorption processes by the nitrogen gas continuation capacity method in the same measuring cell. A BET plot is made based on the relative pressure and the amount of nitrogen molecule adsorption, and the specific surface area is calculated from the plot.

<SO$_x$ adsorption capacity>

A synthetic gas (SO$_2$: 2 vol.%, O$_2$: 5 vol.%, N$_2$: 83 vol.%, H$_2$O: 10 vol.%) is made to contact an activated carbon specimen of 10 cc, consisting of grains controlled to 1 to 3 mm in size, at 100C° for 3 h. at a flow rate of 3 Nl/min. to have the SO$_2$ gas adsorbed. Then, the activated carbon specimen is heated at 400°C for 1.5 h. in an N$_2$ gas flow to have the SO$_2$ gas adsorbed during the previous process carried away by the N$_2$ gas. All the SO$_2$ gas carried away by the N$_2$ gas is absorbed in a 3% aqueous solution of H$_2$O$_2$ (recovered as sulfuric acid through the reaction: SO$_2$ + H$_2$O$_2$ → H$_2$SO$_4$). The amount of adsorbed SO$_2$ determined by the neutralization titration of the absorption liquor by the arsenazo III method specified in JIS K 0103 is defined as the SO$_x$ adsorption capacity. The amount of SO$_2$ adsorbed per 1 g. of activated carbon is expressed using the unit mg/g-ac, where "ac" stands for activated carbon.

<Denitration ratio>

Activated carbon of 170 cc is packed in a cylindrical column (reaction vessel for denitration test) 50 mm in diameter and heated to 90°C, and a synthetic gas (SO$_2$: 135 ppm, NO: 160 ppm, NH$_3$: 450 ppm, O$_2$: 10%, H$_2$O: 10%, and the balance consisting of N$_2$) is heated to 90°C and made to contact the packing layer of the activated carbon at a flow rate of 2 Nl/min. The concentrations of NO are measured at the entry to and the exit from the packing layer of the activated carbon after the synthetic gas is supplied for 20 h., and the denitration ratio is determined by the following equation (2):

$$\text{Denitration ratio} = \{(\text{entry NO concentration}) - (\text{exit NO concentration})\} / (\text{entry NO concentration}) \times 100 \qquad (2).$$

<Ratio of powdering owing to ammonium sulfate formation>

Activated carbon of 170 cc is packed in a cylindrical column (reaction vessel for denitration test) 50 mm in diameter and heated to 90°C, and a synthetic gas (SO$_2$: 135 ppm, NO: 160 ppm, NH$_3$: 450 ppm, O$_2$: 10%, H$_2$O: 10%, and the balance consisting of N$_2$) is made to contact the packing layer of the activated carbon at a flow rate of 2 Nl/min. All the activated carbon is discharged from the cylindrical column after the contact with the synthetic gas for 100 h, lightly stirred in water in a beaker so as to be impregnated with water, filtered through a 1-mm metal mesh to separate a filtrate containing activated carbon fine from activated carbon pellets. The activated carbon fine is separated further from the filtrate by filtration, dried and then weighed to obtain the weight of the fine activated carbon. The activated carbon pellets are reactivated through heating at 400°C for 1.5 h. in an N$_2$ gas flow and then weighed to obtain the total weight of the activated carbon pellets after the reactivation. The sum of the weights of the activated carbon fine and the reactivated activated carbon pellets is defined as the total weight of the reactivated activated carbon. The reactivated activated carbon pellets are sifted through a 3-mm mesh sieve, and the weights of the undersize and the fine activated carbon are added together to obtain the weight of the activated carbon below 3 mm in size. Then, the figure calculated by the following equation (3) is defined as the ratio of the powdering owing to the formation of ammonium sulfate. An apparatus for measuring the ratio of denitration and the ratio of the powdering owing to ammonium sulfate formation is shown in Fig. 12.

$$\text{Ratio of powdering (below 3 mm)} = (\text{weight of activated carbon below 3 mm}) / (\text{total weight of reactivated activated carbon}) \times 100 \qquad (3)$$

The amount of mobile hydrogen components, Roga strength, the ratio of desulfurization and denitration and the ratio of the powdering owing to ammonium sulfate formation in the present invention are measured in the following manner.

<Amount of mobile hydrogen components>

A subject coal specimen is charged into a specimen tube exclusively used for a nuclear magnetic resonance apparatus. Note that there is no specific restriction as to the grain size and shape of the coal specimen as long as the grain size is several millimeters or less so as to be put into the specimen tube. The NMR image of hydrogen nuclei in coal is obtained by the following measurement method: the pulse duration of hydrogen at 90° is set at 8 μsec., the echo time at 50 μsec. to 3 msec., the repetition time at 5 msec. to 1 sec., and the number of accumulations to 512 times; the data size is set at 512 points in the X direction, 512 points in the Y direction and 1 to 512 points in the Z direction; the measurement is done by imposing magnetic field gradients of 89, 96 and 107 gauss/cm, respectively, on the X, Y and Z axes within a short time while the specimen is heated at a rate of 3°C/min. The NMR image of the coal in a plastic state is obtained by carrying out the same measurement procedures continuing the heating further. The distribution at an adequate transverse relaxation time and the amount of mobile hydrogen components are calculated from the images thus obtained. Here, the amount of mobile hydrogen components means the amount of the components having a transverse relaxation time of 100 μsec. or more in the temperature range where the coal is in a plastic state. The multiple pulse and the transverse relaxation time are described in Japanese Unexamined Patent Publication No. H11-326248.

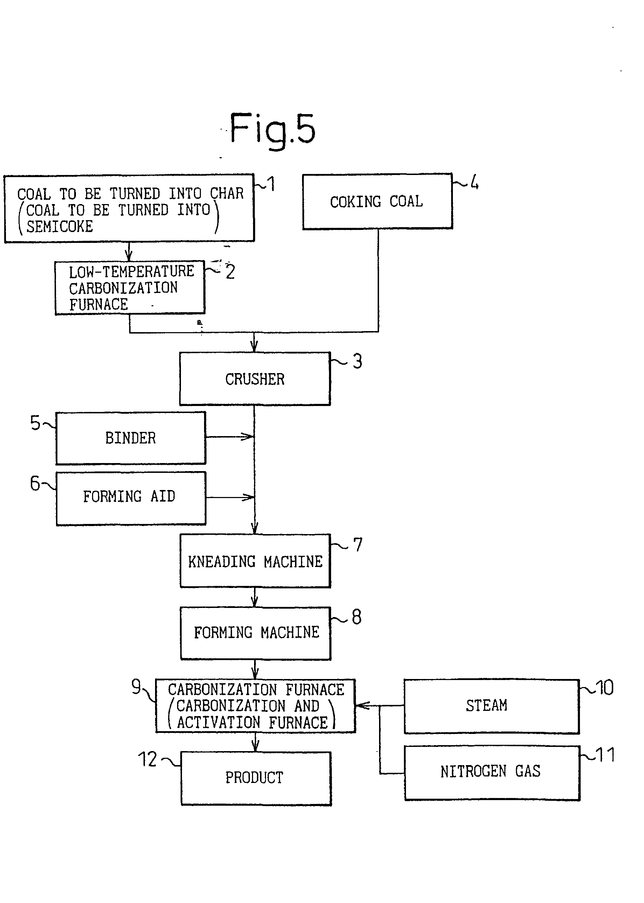

In Fig. 5, reference numeral 1 indicates the coal to be transformed into char through the application of low-temperature carbonization, namely the coal used as the raw material coal of the semicoke which constitutes the main material of the activated carbon according to the present invention. The coal is the one wherein the amount of the mobile hydrogen components calculated from the results of the NMR measurement at a temperature corresponding to the temperature range in which the coal is in a plastic state is 30% or less, preferably from 15 to 30%. The reason why the amount of the mobile hydrogen components calculated from the results of the NMR measurement at a temperature corresponding to the temperature range in which the coal is in a plastic state is to be within the above specified range is that, when the amount of the mobile hydrogen components exceeds 30%, the volume of the pores 10 Å or so in diameter, which are effective for adsorbing $SO_x$ molecules, is decreased and, when the amount is below 15%, on the other hand, the effect of improving the $SO_x$ adsorption capacity becomes saturated and no further significant improvement can be expected.

The coal 1 is transformed into semicoke by charging it into a low-temperature carbonization furnace 2 and carbonizing it at a low temperature under the condition of an oxygen concentration of 6% or less, a heating atmosphere temperature from 300 to 600°C, preferably from 400 to 550°C, and a residence time inside the heating zone of the furnace from 15 to 120 min., preferably from 25 to 80 min. The reasons why the condition of the low-temperature carbonization is defined as above are as follows. When the temperature of the heating atmosphere is 300°C or below or the residence time inside the furnace is 15 min. or shorter, the evaporation of the volatile matter does not advance sufficiently for forming the pore structure required for the semicoke and, consequently, the semicoke obtained will be of a poor pore structure, having only crystal water and a small part of the volatile matter evaporated. If such insufficiently heated semicoke is used as the main material for producing activated carbon, the activating reaction with steam or other activating gas does not proceed sufficiently in the activation process and, as a result, what is obtained is activated carbon having only a poor $SO_x$ adsorption capacity. When the temperature of the heating atmosphere is 600°C or above or the residence time inside the furnace is 120 min. or longer, on the other hand, while the evaporation of the volatile matter advances sufficiently for forming the pore structure, the graphitization of the matrix of the very semicoke overshoots. Since the crystal of graphite is a stable structure in which constituent carbon atoms are arranged regularly, if it exists in activated carbon in a great quantity, not only the $SO_x$ adsorption capacity but also the catalytic activity for denitration is markedly reduced.

Since the $SO_x$ adsorption capacity and the strength of an activated carbon product are determined by the microscopic pores and the coking property, which remains to some extent, of the semicoke which constitutes the main material, the selection of the material coal used for producing semicoke is of vital importance. In order for activated carbon to have a high $SO_x$ adsorption capacity, it is desirable that many pores having an appropriate diameter for adsorbing $SO_x$ molecules be formed in the semicoke to be used as the main material of the activated carbon. The amounts of mobile hydrogen components calculated from the results of the NMR measurement at a temperature corresponding to the temperature range in which the coal is in a plastic state are shown in Table 1, comparing 16 kinds of coal having different degrees of coalification. The range of the temperature at which the kinds of coal listed therein are in a plastic state is from 350 to 510°C.

Besides the above, it is desirable that the amount of mobile hydrogen components calculated from the results of the NMR measurement of the coking coal to be mixed as the ancillary material is from 35 to 45%. The reason for this is that, when a kind of coal having an amount of the mobile hydrogen components below 35% is used as the ancillary material, while the appearance of the produced activated carbon is good, its Roga strength is significantly lowered and, when a kind of coal having an amount of the mobile hydrogen components in excess of 45% is used as the ancillary material, on the other hand, the produced activated carbon swells owing to an excessive coking property and cracks develop as a result and, in addition, many large diameter pores are formed inside the activated carbon and, as a consequence, its Roga strength is lowered.

[Table 1]

Table 1

| Classification | | Amount of mobile hydrogen components (%) |
|---|---|---|
| A | Coal 1 | 20.1 |
| | Coal 2 | 23.1 |
| | Coal 3 | 23.6 |
| | Coal 4 | 25.7 |
| | Coal 5 | 26.1 |
| | Coal 6 | 29.3 |
| B | Coal 7 | 30.5 |
| | Coal 8 | 34.5 |
| C | Coal 9 | 35.4 |
| | Coal 10 | 38.0 |
| | Coal 11 | 38.9 |
| | Coal 12 | 40.2 |
| | Coal 13 | 40.2 |
| D | Coal 14 | 45.8 |
| | Coal 15 | 48.2 |
| | Coal 16 | 51.3 |

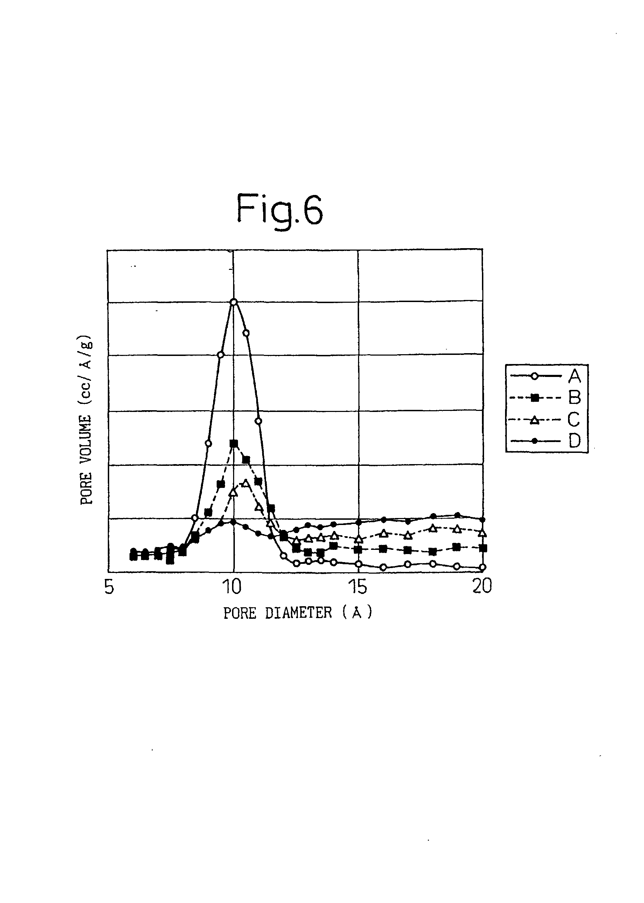

Fig. 6 shows the examples of the measurement results of the pore diameter distributions of the semicoke produced from the 16 kinds of coal by heating at 450°C for 60 min. From the measurement results of the pore diameter distributions of the produced semicoke, said 16 kinds of coal can be classified into four categories, A, B, C and D, according to the degree of the development of the volume of the pores 10 Å or so in diameter. That is to say, compared with the semicoke produced from the kinds of coal belonging to categories B, C and D having an amount of the mobile hydrogen components exceeding 30%, the semicoke produced from the kinds of coal belonging to category A having an amount of the mobile hydrogen components of 30% or less has a structure in which the volume of the pores 10 Å or so in diameter is singularly developed, even under the same heating conditions. Besides, the volume of the pores 10 Å or so in diameter of the semicoke produced from the kinds of coal belonging to category B, C or D decreases as the amount of the mobile hydrogen components increases. While no swelling or expansion is apparent in the semicoke produced from the kinds of coal belonging to category B, the semicoke produced from the kind of coal belonging to categories C or D shows remarkable swelling; coarse pores are seen in sectional surfaces of such semicoke, and a number of coarse pores caused by swelling or expansion are seen also on the outer surface of the semicoke. In the case of the kinds of coal belonging to category D, especially, coal grains are deformed by swelling and they strongly stick to each other by fusion, causing problems in the operation of activated carbon production.

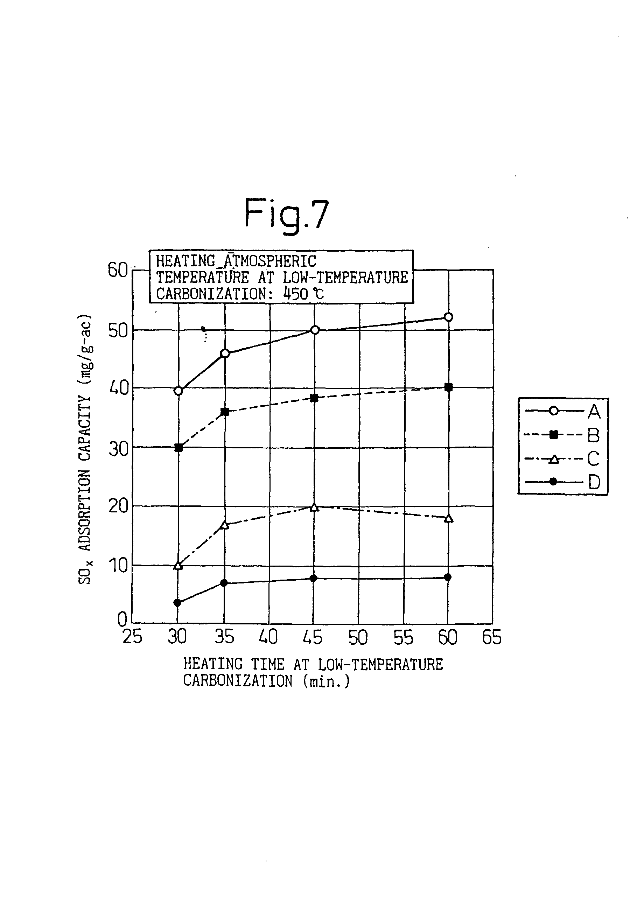

Next, Fig. 7 shows the relation between the $SO_x$ adsorption capacity of the semicoke produced and the heating time when the low-temperature carbonization is applied at 450°C. From this result, it is clear that the semicoke produced from the kinds of coal belonging to category A has the best $SO_x$ adsorption capacity, and the $SO_x$ adsorption capacity decreases as the amount of the mobile hydrogen components in the coal increases. This indicates that, for effectively enhancing the $SO_x$ adsorption capacity at the stage where the coal has been changed into the semicoke to be used as the main material, it is necessary to increase the volume of the pores 10 Å or so in diameter as much as possible and, to this end, it is desirable to use as the main material the semicoke produced by applying low-temperature carbonization to the kinds of coal belonging to category A wherein the amount of the mobile hydrogen components calculated from the results of the NMR measurement in the temperature range where the coal is in a plastic state is 30% or less.

The semicoke to be used as the main material is crushed in a crusher 3. The coking coal 4 to be used as the ancillary material is also crushed in the crusher 3. Then, the main material semicoke and the ancillary material coking coal 4 thus crushed are mixed at a ratio from 9:1 to 5:5, preferably from 8:2 to 6:4, to form a crushed grain mixture. Then, the crushed grain mixture is fed to a kneading machine 7, where coal-based or petroleum-based heavy oil such as tar or pitch, or waste liquor from pulp production or the like, is added as a binder 5 and, in addition, a forming aid 6 is added. The kneaded mixture is then fed to a forming machine 8 and formed into pellets 5 to 20 mm in diameter and 5 to 30 mm in length. Subsequently, the pellets are fed at a prescribed rate to a carbonization furnace (carbonization and activation furnace) 9 such as a rotary kiln and, there, they are carbonized and activated at a temperature from 750 to 950°C and a furnace resident time from 60 to 90 min., while steam 10 and nitrogen gas 11 are added so that the activation advances effectively. By the above procedures, a product 12, namely high-strength activated carbon: containing volatile matter of 2.3%, fixed carbon of 91%, the $Fe_2O_3 + TiO_2$ component of 0.7% and the $K_2O + Na_2O + CaO + MgO$ component of 0.4%; having high desulfurization and denitration performance and high durability such as an impact strength of 99%, a Roga strength of 99%, a $SO_x$ adsorption capacity of 70 mg/g., a denitration ratio of 24% and a powdering ratio of 0.5%; and being quite suitable for being used in a dry desulfurization and denitration apparatus using $NH_3$ addition; is produced.

An exhaust gas containing $SO_x$: 135 ppm, $NO_x$: 150 ppm, $O_2$: 10% and $H_2O$: 10% was treated by using activated carbon according to the present invention, passing through an adsorption tower equipped with three moving beds wherein the activated carbon moves downwards so as to move in the opposite direction to the flow of the gas, applying the addition of $NH_3$ by 150 ppm at the third bed, and moving the activated carbon beds at a space velocity of 400 l/h. The activated carbon after the adsorption treatment could be reused after removing sulfuric contents in a regenerator kept at 400°C; a very stable operation was possible at the reuse of the activated carbon, achieving a desulfurization ratio of 99%, a denitration ratio of 25% and a powdering ratio of 0.5%.

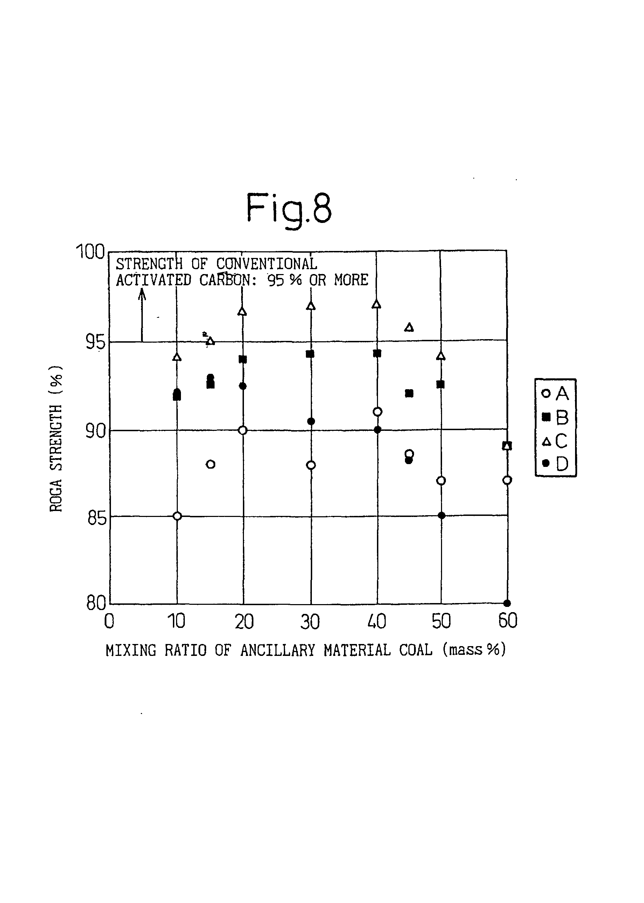

Fig. 8 shows the relation between the addition amount of the ancillary material coal mixed to the main material and the Roga strength. In this case, the main material semicoke was produced by heating the kind of coal 1 belonging to category A at 450°C for 60 min. In the activated carbon for which the coal belonging to category A or B was used as the coking coal to be mixed as the ancillary material, the product shape was good with no apparent cracking caused by swelling or expansion and its grain size was narrowly distributed, but the Roga strength was significantly lower than conventional activated carbon. In the activated carbon for which the coal belonging to category D was used as the coking coal to be mixed as the ancillary material, the swelling caused by an excessive coking property occurred, a great number of large diameter pores were seen at section surfaces and the Roga strength was lower than conventional activated carbon. In the activated carbon for which the coal belonging to category C was used as the coking coal to be mixed as the ancillary material, in contrast, when the mixing ratio of the main material semicoke and the ancillary material coking coal was within the range from 9:1 to 5:5, the obtained activated carbon did not have the cracks caused by the swelling or expansion, the product shape was good, the grain size was narrowly distributed and the Roga strength was higher than conventional activated carbon. This indicates that, for obtaining robust activated carbon, it is essential to select as the ancillary material a kind of coking coal in which the amount of the mobile hydrogen components calculated from the results of the NMR measurement at a temperature corresponding to the temperature range where the coal is in a plastic state is from 35 to 45%.

Example 1

Various kinds of activated carbon containing different amounts of volatile matters, fixed carbon, $Fe_2O_3 + TiO_2$ components and $K_2O + Na_2O + CaO + MgO$ components were produced by controlling the mixing ratio of two or more kinds of coal which were the raw material of the activated carbon and keeping identical the production conditions of the grain size of crushing, the temperature and time of carbonization, the shape of forming, the temperature of activation and the amount of activating steam. Table 2 shows the properties, namely the impact strength, Roga strength, $SO_x$ adsorption amount, denitration ratio and powdering ratio, of the kinds of activated carbon falling within the rage of the present invention and those outside it. As is clear from the table, when the volatile matter content is 2% or more, if any one of the other parameters, namely the amounts of the fixed carbon, $Fe_2O_3 + TiO_2$ component and $K_2O + Na_2O + CaO + MgO$ component, is outside the range of the present invention, the required propeties are not satisfied.

Table 3 shows the performance figures of the kinds of activated carbon produced by changing the contents of $Fe_2O_3$, $TiO_2$, $K_2O$, $Na_2O$, $CaO$ and $MgO$ in the material coals through the addition of respective chemicals and changing, among the above production condition items, the contents of the fixed carbon and volatile matter through the control of the carbonization temperature and time, but keeping the grain size and other material conditions the same as the above. As in the case where different kinds of coal are used as the materials, if any one of the amounts of the fixed carbon, volatile matter, $Fe_2O_3 + TiO_2$ component and $K_2O + Na_2O + CaO + MgO$ component is outside the range of the present invention, the required properties are not satisfied.

[Tables 2 and 3]

Table 2

| | Invented example 1 | Comparative example 1 | Comparative example 2 | Comparative example 3 | Comparative example 4 |
|---|---|---|---|---|---|
| Volatile matter (%) | 2.3 | 2.4 | 2.8 | 3.0 | 2.0 |
| Fixed carbon (%) | 91 | 88 | 83 | 94 | 93 |
| $Fe_2O_3+TiO_2$ (%) | 0.7 | 1.0 | 0.9 | 0.7 | 0.6 |
| $K_2O+Na_2O+CaO+MgO$ (%) | 0.4 | 1.2 | 1.3 | 0.1 | 0.7 |
| Specific surface area $(m^2/g)$ | 240 | 220 | 240 | 240 | 280 |
| Impact strength (%) | 99 | 96 | 94 | 96 | 96 |
| Roga strength (%) | 99 | 97 | 96 | 96 | 98 |
| $SO_x$ adsorption amount $(mg/g)$ | 70 | 70 | 50 | 70 | 75 |
| Denitration ratio (%) | 24 | 23 | 20 | 25 | 8 |
| Powdering ratio (%) | 0.5 | 1.1 | 1.2 | 10 | 0.7 |

Table 3

| | Invented example 1 | Comparative example 1 | Comparative example 2 | Comparative example 3 | Comparative example 4 |
|---|---|---|---|---|---|
| Volatile matter (%) | 2.2 | 3.0 | 2.2 | 2.5 | 1.7 |
| Fixed carbon (%) | 90 | 85 | 90 | 91 | 89 |
| $Fe_2O_3+TiO_2$ (%) | 0.8 | 1.5 | 0.5 | 1.0 | 1.0 |
| $K_2O+Na_2O+CaO+MgO$ (%) | 0.6 | 1.0 | 0.7 | 0.2 | 0.6 |
| Specific surface area ($m^2/g$) | 260 | 240 | 250 | 270 | 250 |
| Impact strength (%) | 98 | 93 | 97 | 98 | 97 |
| Roga strength (%) | 98 | 94 | 98 | 98 | 96 |
| $SO_x$ adsorption amount (mg/g) | 79 | 55 | 75 | 78 | 73 |
| Denitration ratio (%) | 28 | 30 | 13 | 29 | 20 |
| Powdering ratio (%) | 0.3 | 0.9 | 0.8 | 10 | 1.8 |

Example 2

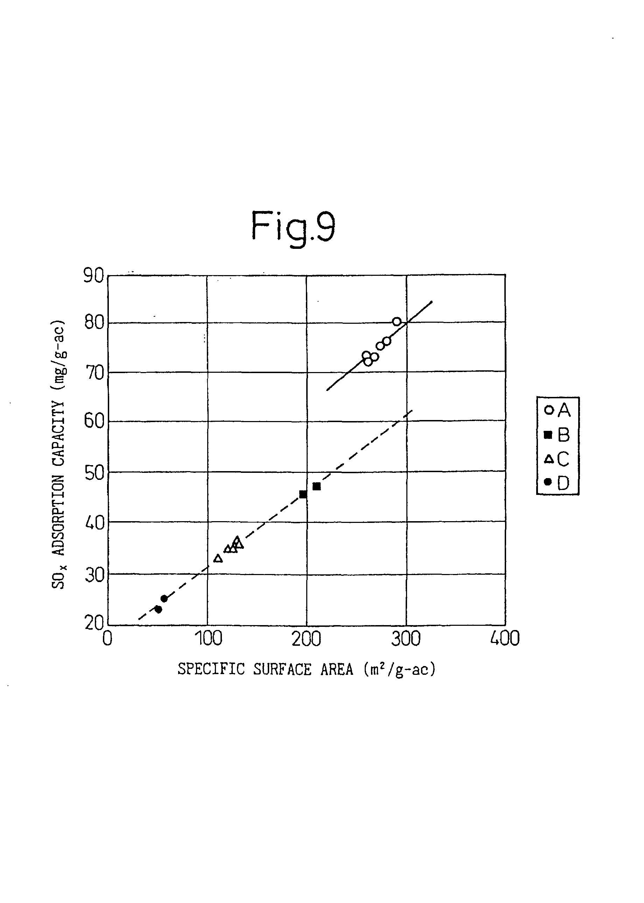

The relation between the specific surface area and $SO_x$ adsorption capacity of the activated carbon produced through the method described above is shown in Fig. 9 together with that of comparative examples. Semicoke was produced through the low-temperature carbonization of the six kinds of coal belonging to category A wherein the amounts of the mobile hydrogen components were 30% or less, among the 16 kinds of coal having different amounts of the mobile hydrogen components listed in Table 1, and activated carbon was produced using the semicoke thus obtained as the main material. The kinds of coal belonging to category A were rough-crushed to a grain size of 50 mm or less, carbonized into semicoke in an external heating type rotary kiln under the conditions of an oxygen concentration of 2% or less, a heating atmosphere temperature of 450°C and a residence time in the kiln of 60 min., and then the semicoke thus produced was crushed in a crusher to be used as the main material of the activated carbon. In the production of the activated carbon, among the 16 kinds of coal having different contents of the mobile hydrogen components listed in Table 1, the pitch coal having a fusion index of the mobile hydrogen components being 40.2% was crushed in a crusher and used as the ancillary material. The main and ancillary materials were mixed in a mass ratio of 8:2, then coal-based soft pitch of 20 mass % was added as a binder and water of 15 mass % as a forming aid to the mixture. After sufficiently kneading the mixture thus prepared in a kneading machine, it was formed into columnar pellets 10 mm in diameter and 10 mm in length by an extrusion forming machine. The activated carbon was produced from the pellets by feeding them to an external heating type rotary kiln and carbonizing and activating them through heating, in an atmosphere having an oxygen concentration of 1% and an injection amount of activating steam of 1.0 kg per kg of the pellets, so that the highest temperature of the pellets was 830°C, the average heating rate was 18°C/min. and the holding time at 800°C or above was 40 min. The activated carbon thus obtained had a Roga strength of 97.9 to 98.8%, a $SO_x$ adsorption capacity of 72.0 to 80.2 mg/g-ac, a denitration ratio of 48% and a ratio of the powdering owing to ammonium sulfate formation of 0.01% and, thus it was excellent as the activated carbon for desulfurization and denitration use.

[Comparative example 1]

Semicoke was produced through the low-temperature carbonization of the two kinds of coal belonging to category B wherein the amounts of the mobile hydrogen components were over 30% but below 35%, among the 16 kinds of coal having different amounts of the mobile hydrogen components listed in Table 1, and activated carbon was produced using the semicoke thus obtained as the main material. The kinds of coal belonging to category B were rough-crushed to grain size of 50 mm or less, carbonized into semicoke in an external heating type rotary kiln under the conditions of an oxygen concentration of 2% or less, a heating atmosphere temperature of 450°C and a residence time in the kiln of 60 min., and then the semicoke thus produced was crushed in a crusher to be used as the main material of the activated carbon. In the production of the activated carbon, among the 16 kinds of coal having different contents of the mobile hydrogen components listed in Table 1, the pitch coal having a fusion index of the mobile hydrogen components being 40.2% was crushed in a crusher and used as the ancillary material. The main and ancillary materials were mixed in a mass ratio of 8:2, then coal-based soft pitch of 20 mass % was added as a binder and water of 15 mass % as a forming aid to the mixture. After sufficiently kneading the mixture thus prepared in a kneading machine, it was formed into columnar pellets 10 mm in diameter and 10 mm in length by an extrusion forming machine. The activated carbon was produced from the pellets by feeding them to an external heating type rotary kiln and carbonizing and activating them through heating, in an atmosphere having an oxygen concentration of 1% and an injection amount of activating steam of 1.0 kg per kg of the pellets, so that the highest temperature of the pellets was 830°C, the average heating rate was 18°C/min. and the holding time at 800°C or above was 40 min. The activated carbon thus obtained had a sufficiently high Roga strength of 97.1 to 98.2%, but it had a $SO_x$ adsorption capacity of 45.5 to 47.0 mg/g-ac, a denitration ratio of 38% and a ratio of the powdering owing to ammonium sulfate formation of 0.9%, much inferior to the example according to the present invention.

[Comparative example 2]

Semicoke was produced through the low-temperature carbonization of the six kinds of coal belonging to category C wherein the amounts of the mobile hydrogen components were from 35% to 45%, among the 16 kinds of coal having different amounts of the mobile hydrogen components listed in Table 1, and activated carbon was produced using the semicoke thus obtained as the main material. The kinds of coal belonging to category C were rough-crushed to a grain size of 50 mm or less, carbonized into semicoke in an external heating type rotary kiln under the conditions of an oxygen concentration of 2% or less, a heating atmosphere temperature of 450°C and a residence time in the kiln of 60 min., and then the semicoke thus produced was crushed in a crusher to be used as the main material of the activated carbon. In the production of the activated carbon, among the 16 kinds of coal having different contents of the mobile hydrogen components listed in Table 1, the pitch coal having a fusion index of the mobile hydrogen components being 40.2% was crushed in a crusher and used as the ancillary material. The main and ancillary materials were mixed in a mass ratio of 8:2, then coal-based soft pitch of 20 mass % was added as a binder and water of 15 mass % as a forming aid to the mixture. After sufficiently kneading the mixture thus prepared in a kneading machine, it was formed into columnar pellets 10 mm in diameter and 10 mm in length by an extrusion forming machine. The activated carbon was produced from the pellets by feeding them to an external heating type rotary kiln and carbonizing and activating them through heating, in an atmosphere having an oxygen concentration of 1% and an injection amount of activating steam of 1.0 kg per kg of the pellets, so that the highest temperature of the pellets was 830°C, the average heating rate was 18°C/min. and the holding time at 800°C or above was 40 min. The activated carbon thus obtained had a Roga strength of 92.0 to 94.8%, a $SO_x$ adsorption capacity of 33.0 to 36.0 mg/g-ac, a denitration ratio of 38% and a ratio of the powdering owing to ammonium sulfate formation of 1.2%, much inferior to the example according to the present invention in any of the performance figures.

[Comparative example 3]

Semicoke was produced through the low-temperature carbonization of the three kinds of coal belonging to category D wherein the amounts of the mobile hydrogen components exceeded 45%, among the 16 kinds of coal having different amounts of the mobile hydrogen components listed in Table 1, and activated carbon was produced using the semicoke thus obtained as the main material. The kinds of coal belonging to category D were rough-crushed to grain size of 50 mm or less, carbonized into semicoke in an external heating type rotary kiln under the conditions of an oxygen concentration of 2% or less, a heating atmosphere temperature of 450°C and a residence time in the kiln of 60 min., and then the semicoke thus produced was crushed in a crusher to be used as the main material of the activated carbon. In the production of the activated carbon, among the 16 kinds of coal having different contents of the mobile hydrogen components listed in Table 1, the pitch coal having a fusion index of the mobile hydrogen components being 40.2% was crushed in a crusher and used as the ancillary material. The main and ancillary materials were mixed in a mass ratio of 8:2, then coal-based soft pitch of 20 mass % was added as a binder and water of 15 mass % as a forming aid to the coal mixture. After sufficiently kneading the mixture thus prepared in a kneading machine, it was formed into columnar pellets 10 mm in diameter and 10 mm in length by an extrusion forming machine. The activated carbon was produced from the pellets by feeding them to an external heating type rotary kiln and carbonizing and activating them through heating, in an atmosphere having an oxygen concentration of 1% and an injection amount of activating steam of 1.0 kg per kg of the pellets, so that the highest temperature of the pellets was 830°C, the average heating rate was 18°C/min. and the holding time at 800°C or above was 40 min. The activated carbon thus obtained had a Roga strength of 90.2 to 92.1%, a $SO_x$ adsorption capacity of 10.8 to 12.0 mg/g-ac, a denitration ratio of 5% and a ratio of powdering owing to ammonium sulfate formation of 1.0%, remarkably inferior to the example according to the present invention in any of the performance figures.

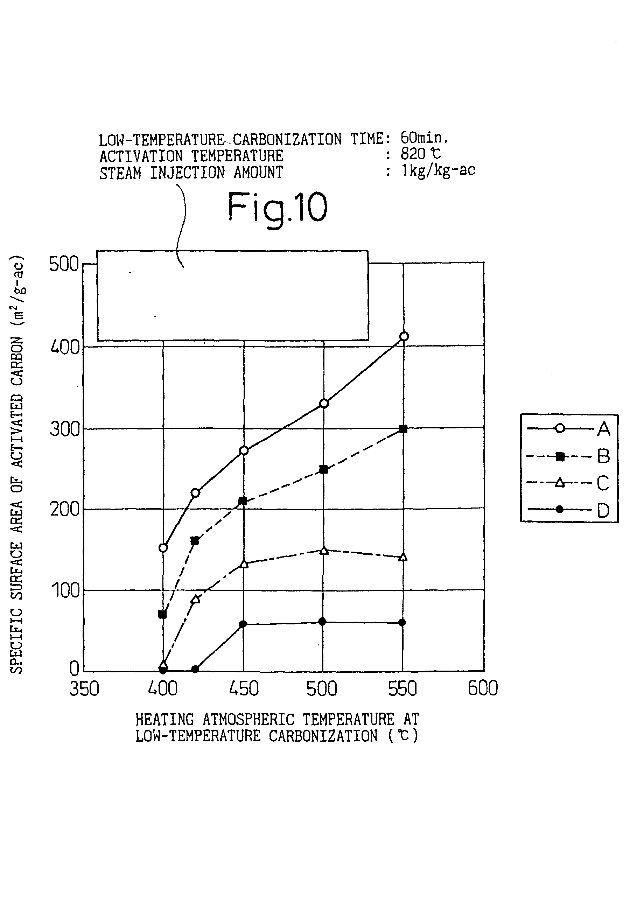

Fig. 9 shows that the $SO_x$ adsorption capacity is improved as the specific surface area is increased by the formation of pores. It is clear from the figure that the activated carbon having a large specific surface area produced from the coal of category A shows good desulfurization performance. As the specific surface area changes widely depending on the temperature of the heating atmosphere of the low-temperature carbonization as shown in Fig. 10, it is desirable to adequately control the temperature during the carbonization.

Industrial Applicability

As has been explained above, the activated carbon according to the present invention is an economical activated carbon excellent in desulfurization and denitration performance, strength, impact resistance and wear resistance, and demonstrates very little powdering even when used in a denitration apparatus using ammonia. The method of producing activated carbon according to the present invention makes it possible to form a great number of pores 10 Å or so in diameter suitable for adsorbing $SO_x$ molecules by using the kind of coal, wherein the amount of the mobile hydrogen components calculated from the results of the NMR measurement at a temperature at which the coal is in a plastic state is 30% or less, as the coal for producing the semicoke used as the main material through low-temperature carbonization, and makes the activated carbon thus produced from the material have a high strength and an excellent desulfurization performance ($SO_x$ adsorption capacity, for instance). In addition, the method also makes it possible to produce activated carbon excellent in appearance and having a high Roga strength, good desulfurization performance ($SO_x$ adsorption capacity) and a low ratio of the powdering owing to ammonium sulfate formation by using the kind of coking coal, wherein the amount of the mobile hydrogen components calculated from the results of the NMR measurement is from 35 to 45%, as the ancillary material to be mixed with the main material semicoke. Furthermore, the method makes it possible to obtain the activated carbon excellent in the desulfurization and denitration performance.

**Claims**

1.  Activated carbon produced from coal for desulfurization and denitration use **characterized by** containing volatile matter at 2.0% or more, fixed carbon at 87 to 94%, $Fe_2O_3 + TiO_2$ at 0.7% or more and $K_2O + Na_2O + CaO + MgO$ at 0.3 to 1.0%.

2.  A method of producing activated carbon by using the semicoke produced by applying low-temperature carbonization to coal at a temperature from 300 to 600°C as the main material and a kind of coal having a coking property as the ancillary material, kneading and forming the materials into pellets with an addition of a binder and then applying a carbonization and activation treatment to the pellets, **characterized by** using the kind of coal, wherein the amount of mobile hydrogen components calculated from the results of the NMR measurement at a temperature at which the coal is in a plastic state is 30% or less, as the material coal of the semicoke which constitutes the main material of the activated carbon.

3.  A method of producing activated carbon according to claim 2, **characterized by** using the kind of coal, wherein the amount of mobile hydrogen components calculated from the results of the NMR measurement at a temperature at which the coal is in a plastic state is 35 to 45%, as a coking coal which constitutes the ancillary material of the activated carbon.

# Fig.1

# Fig.2

# Fig.3

# Fig.4

# Fig.5

```
┌──────────────────────────┐ ～1        ┌──────────────────┐～4
│ COAL TO BE TURNED INTO CHAR │           │   COKING COAL    │
│ (COAL TO BE TURNED INTO)  │           └──────────────────┘
│  SEMICOKE                │
└──────────────────────────┘
         │
         ▼
┌──────────────────────┐ ～2
│ LOW-TEMPERATURE      │
│ CARBONIZATION        │
│ FURNACE              │
└──────────────────────┘
         │
         ▼
┌──────────────────────┐ ～3
│      CRUSHER         │
└──────────────────────┘

5～┌──────────────────┐
   │      BINDER      │──────▶
   └──────────────────┘

6～┌──────────────────┐
   │   FORMING AID    │──────▶
   └──────────────────┘
         │
         ▼
┌──────────────────────┐ ～7
│  KNEADING MACHINE    │
└──────────────────────┘
         │
         ▼
┌──────────────────────┐ ～8
│   FORMING MACHINE    │
└──────────────────────┘
         │
         ▼
9～┌──────────────────────────┐         ┌──────────────────┐～10
   │ CARBONIZATION FURNACE    │◀────────│      STEAM       │
   │ (CARBONIZATION AND  )    │         └──────────────────┘
   │ (ACTIVATION FURNACE )    │
   └──────────────────────────┘         ┌──────────────────┐～11
         │                              │   NITROGEN GAS   │
         ▼                              └──────────────────┘
12～┌──────────────────┐
    │     PRODUCT      │
    └──────────────────┘
```

# Fig.6

# Fig.7

HEATING ATMOSPHERIC TEMPERATURE AT LOW-TEMPERATURE CARBONIZATION: 450 ℃

Y-axis: $SO_x$ ADSORPTION CAPACITY (mg/g-ac)

X-axis: HEATING TIME AT LOW-TEMPERATURE CARBONIZATION (min.)

Legend: A, B, C, D

# Fig.8

STRENGTH OF CONVENTIONAL
ACTIVATED CARBON: 95 % OR MORE

ROGA STRENGTH (%)

MIXING RATIO OF ANCILLARY MATERIAL COAL (mass %)

○ A
■ B
△ C
● D

# Fig.9

LOW-TEMPERATURE CARBONIZATION TIME: 60min.
ACTIVATION TEMPERATURE          : 820 ℃
STEAM INJECTION AMOUNT          : 1kg/kg-ac

## Fig.10

# Fig.11

ACTIVATED
CARBON
SPECIMEN
30g

30

$\phi$200

70

ROTATING
MOTOR

# Fig.12

NO METER → EXHAUST GAS

SWITCHING VALVE

SYNTHETIC GAS

ACTIVATED
CARBON PACKING
LAYER

ELECTRIC
FURNACE
90℃

CYLINDRICAL
TUBE ($\phi$ 50)

## INTERNATIONAL SEARCH REPORT

| International application No. |
| --- |
| PCT/JP02/00522 |

**A. CLASSIFICATION OF SUBJECT MATTER**
Int.Cl⁷ C01B31/08, B01J20/20, B01D53/60

According to International Patent Classification (IPC) or to both national classification and IPC

**B. FIELDS SEARCHED**

Minimum documentation searched (classification system followed by classification symbols)
Int.Cl⁷ C01B31/08, B01J20/20, B01D53/60, D01F9/14

Documentation searched other than minimum documentation to the extent that such documents are included in the fields searched

| | | | |
| --- | --- | --- | --- |
| Jitsuyo Shinan Koho | 1926–1996 | Jitsuyo Shinan Toroku Koho | 1996–2002 |
| Kokai Jitsuyo Shinan Koho | 1971–2002 | Toroku Jitsuyo Shinan Koho | 1994–2002 |

Electronic data base consulted during the international search (name of data base and, where practicable, search terms used)
JICST FILE(JOIS)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2000-225320 A (Mitsubishi Chemical Corp.), 15 August, 2000 (15.08.00), Full text (Family: none) | 1-3 |
| A | JP 11-326248 A (Nippon Steel Corp.), 26 November, 1999 (26.11.99), Full text (Family: none) | 1-3 |
| A | JP 9-66231 A (Mitsubishi Chemical Corp.), 11 March, 1997 (11.03.97), Full text (Family: none) | 1-3 |
| A | JP 9-20509 A (Mitsubishi Chemical Corp.), 21 January, 1997 (21.01.97), Full text & EP 725036 A1 & US 5965479 A & DE 69603515 E | 1-3 |

[×] Further documents are listed in the continuation of Box C.     [ ] See patent family annex.

| | |
| --- | --- |
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| Date of the actual completion of the international search <br> 16 April, 2002 (16.04.02) | Date of mailing of the international search report <br> 23 April, 2002 (23.04.02) |
| Name and mailing address of the ISA/ <br> Japanese Patent Office | Authorized officer |
| Facsimile No. | Telephone No. |

Form PCT/ISA/210 (second sheet) (July 1998)

## INTERNATIONAL SEARCH REPORT

| International application No. |
|---|
| PCT/JP02/00522 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-555 A  (Sumitomo Heavy Industries, Ltd.), 06 January, 1999 (06.01.99), Full text (Family: none) | 1-3 |
| A | JP 7-277716 A  (Cataler Kogyo K.K.), 24 October, 1995 (24.10.95), Full text (Family: none) | 1-3 |
| A | JP 11-157822 A  (Cataler Corp.), 15 June, 1999 (15.06.99), Full text (Family: none) | 1-3 |
| A | JP 11-349317 A  (Nippon Steel Corp.), 21 December, 1999 (21.12.99), Full text (Family: none) | 1-3 |

Form PCT/ISA/210 (continuation of second sheet) (July 1998)